# FASCICULE DE BREVET EUROPEEN

(11) **EP 3 208 059 B1**
(45) Date de publication et mention de la délivrance du brevet: **13.03.2019**
(21) Numéro de dépôt: 17153411.8
(22) Date de dépôt: 26.01.2017
(51) Int. Cl.: B27K 3/15, B27K 5/02, B27K 5/06, C08H 8/00

(54) **UTILISATION D'UN SATURATEUR POUR MAINTENIR LA PERFORMANCE AU FEU INITIALE DU BOIS EN EXTERIEUR**
VERWENDUNG EINES ANREICHERUNGSAPPARATS ZUR AUFRECHTERHALTUNG DER LEISTUNG IN DER ANFANGSPHASE EINES HOLZFEUERS IM FREIEN
USE OF A SATURATOR TO MAINTAIN THE INITIAL FIRE PERFORMANCE OF EXTERIOR WOOD

(30) Priorité: 17.02.2016 FR 1651287
(43) Date de publication de la demande: 23.08.2017
(73) Titulaire: RIEU TECHNOLOGY, 91070 Bondoufle (FR)
(72) Inventeur: SCOLAN, Amélie, 91810 VERT LE GRAND (FR); SAUVAGET, Didier, 91850 BOURAY SUR JUINE (FR)
(74) Mandataire: IPAZ

(56) Documents cités:
- EP-A2- 1 679 166
- WO-A1-02/090069
- NZ-A- 590 206
- US-A1- 2009 305 071

## Description

La présente invention concerne l'utilisation d'un saturateur pour protéger durablement un bois brut extérieur et maintenir la performance au feu initiale et l'aspect esthétique dudit bois.

Le bois est l'un des plus anciens matériaux de construction et est toujours largement utilisé dans la construction de bâtiment. Un bois d'extérieur est en contact permanent avec les éléments favorisant le vieillissement et la dégradation du bois: l'altération biologique et l'agression climatique. L'altération biologique est due au développement sur le bois de champignons lignivores et de pourritures et des insectes xylophages, tels que les termites, vrillettes, lyctus. Plusieurs facteurs peuvent déclencher cette situation dont la température ambiante, une hygrométrie importante du bois, la présence de substances nutritives, etc.

Les agressions climatiques, telles que les rayons du soleil (chaleur et rayons ultraviolets de la lumière solaire), l'humidité (pluie, rosée, glace, neige), la pollution, causent également des dommages sérieux au bois. En l'absence de protection appropriée, le bois absorbe de l'eau, se gonfle et se contracte en séchant. L'important contraste entre les saisons chaudes et froides accentue ce phénomène. Au fur et à mesure du temps, il perdra sa teinte naturelle et grisaillera.

En plus de ces contraintes, les bois d'extérieur, entre autre les bardages, sont soumis à une norme européenne harmonisée NF EN14915 décembre 2013. Ainsi, ces bois, en tant que matériau de construction, doivent faire référence et être conformes au Règlement des Produits de Construction 305/2011/UE. Ce règlement impose un marquage CE et une déclaration de performance (DoP). Cette déclaration définit les caractéristiques essentielles requises pour les bois d'extérieur. Une de ces caractéristiques essentielles est la réaction au feu exprimée en Euroclasse. La réaction au feu est le comportement d'un matériau comme combustible vis-à-vis du feu. Par exemple, selon le règlement français sur les établissements recevant du public (ERP), le niveau de réaction au feu requis pour le revêtement de façade de certains types de constructions doit atteindre le niveau Euroclasse C.

Pour protéger les bois contre les intempéries, il est fréquent d'utiliser des saturateurs pénétrant dans la profondeur du bois par imprégnation, comme décrit par exemple dans le brevet NZ 590206 A. Un saturateur de bois extérieur est un revêtement à forte pénétration ne laissant pas un film apparent en surface. Les saturateurs disponibles sur le marché sont souvent à base d'huiles naturelles ou à base de résines synthétiques et utilisés pour conserver l'aspect décoratif du bois extérieur et pour protéger le bois contre l'altération biologique et les intempéries.

Cependant, une fois absorbé par un bois extérieur brut, il est impossible de prévoir si ce bois imprégné dudit saturateur peut maintenir le même niveau de performance au feu que celui du bois brut et si ce bois traité peut maintenir sa performance au feu dans le temps. En effet, il est fréquent qu'un bois extérieur brut, après traitement par un saturateur, perde son niveau de classement de performance au feu et devienne par conséquent inapproprié pour certains types d'usage.

Sur le marché, il existe un type de saturateur non déclassant (contenant un agent ignifugeant) pour bois extérieur ayant subi préalablement un traitement d'ignifugation par imprégnation. Dans ce cas, ce système permet de maintenir voir d'améliorer la performance au feu du bois brut extérieur. Cependant, ce système nécessite une imprégnation sous pression et une étape d'ignifugation dans la masse avant l'imprégnation par le saturateur. Cette méthode nécessitant un équipement matériel lourd, par exemple un autoclave, n'est praticable que sur du bois neuf et ne peut pas s'appliquer à un bois extérieur déjà installé.

Il existe par conséquent toujours une nécessité de mettre à disposition une méthode simple permettant de maintenir durablement à la fois la performance au feu initiale, l'aspect décoratif et la protection contre l'altération biologique et l'agression climatique d'un bois extérieur brut, sans faire appel nécessairement à un équipement matériel lourd et qui puisse s'appliquer sur du bois brut déjà installé.

La présente invention a pour objet l'utilisation d'un saturateur de bois extérieur brut dépourvu d'agent ignifugeant pour maintenir durablement la performance au feu initiale, l'aspect décoratif et la protection dudit bois après l'imprégnation par ledit saturateur, ledit saturateur comprenant :
- 79,7-95% en poids total dudit saturateur d'un ou plusieurs solvants hydromiscibles,
- 3-10% en poids total dudit saturateur d'un liant choisi parmi les copolymères acryliques, les copolymères vinyliques, les copolymères alkydes, les copolymères acryliques vinyles, les copolymères acryliques alkydes, les polymères de structure noyau-enveloppe à noyau organique ou minéral, ou un mélange de ceux-ci,
- 1-3% en poids total dudit saturateur d'un hydrofuge choisi parmi les copolymères à base de silicone, les copolymères à base de siloxane ou les copolymères fluorés, ou un mélange de ceux-ci,
- 0,5-2% en poids total dudit saturateur d'au moins une matière colorante.

Un saturateur utilisé dans le cadre de l'invention ne comporte pas d'agent ignifugeant. On entend par « agent ignifugeant » un agent chimique qui permet d'éviter l'inflammation ou de la retarder et de ralentir la propagation des flammes en interrompant ou en gênant le processus de combustion. La plupart des agents ignifugeants connus dans l'art antérieur sont les dérivés halogénés, essentiellement à base de brome ou de chlore, les composés à base d'azote, les hydroxydes métalliques et les dérivés du phosphore.

On peut citer à titre d'exemple des hydroxydes métalliques l'hydroxyde d'aluminium.

Les dérivés du phosphore peuvent être des phosphates organiques, tels que le résorcinol bis (diphenylphosphate), ou les phosphates minéraux, tels que les pyrophosphates, les polyphosphates d'ammonium ou de mélamine, les phosphinates d'aluminium.

La performance au feu initiale est la performance au feu d'un bois brut sans traitement. Elle est évaluée à l'aide de l'appareil d'essai SBI (Single Burning Item) conformément à la norme NF EN 13823 février 2013 ou la norme NF EN ISO 11925-2 février 2013. La performance au feu est déterminée essentiellement par la valeur FIGRA, l'indice de vitesse de développement du feu, et la valeur THR₆₀₀ₛ qui correspond à la quantité de chaleur due à la combustion de l'éprouvette pendant les 600 premières secondes d'exposition à la flamme du brûleur.

L'aspect esthétique du bois extérieur concerne notamment la couleur du bois. L'utilisation d'un saturateur souvent permet de modifier la couleur du bois sans masquer le veinage de ce dernier.

La protection du bois consiste en la protection du bois contre des champignons et des insectes et contre les intempéries. La résistance vis-à-vis des champignons et des insectes d'un bois extérieur brut après le traitement par un produit de protection, aussi connue comme la durabilité dudit produit, peut être déterminée selon le test de vieillissement naturel (1 an) conformément à la norme EN927-3 octobre 2012 ou selon le test de vieillissement accéléré (12 semaines) par exposition à des lampes UV fluorescentes et à de l'eau, décrit dans la norme EN927-6 octobre 2006.

On entend par « durablement » le maintien pendant au moins 1 an de la performance au feu initiale, de l'aspect décoratif et de la protection contre divers facteurs d'attaques d'un bois extérieur vieilli naturellement aux conditions définies dans la norme EN927-3 octobre 2012.

Dans le cadre de l'invention, le pourcentage d'un composant du saturateur est exprimé comme le pourcentage de la matière pure dudit composant par rapport au poids total dudit saturateur.

Dans le saturateur mis en oeuvre dans l'invention, le liant, c'est à dire la partie non volatile du milieu de suspension, est un composant décisif pour obtenir un saturateur ayant les propriétés recherchées.

Conformément à l'invention, le liant est choisi parmi les copolymères acryliques, les copolymères vinyliques, les copolymères alkydes, les copolymères acryliques vinyles, les copolymères acryliques alkydes, les polymères de structure noyau-enveloppe à noyau organique ou minéral, ou un mélange de ceux-ci. Ces composés en tant que liant améliorent la durabilité du saturateur tout en maintenant la performance au feu initiale du bois.

On entend par « copolymère acrylique » un copolymère résultant de la copolymérisation de monomères acryliques et/ou méthacryliques, avec fréquemment d'autres monomères.

On entend par « copolymère vinylique » un copolymère résultant de la copolymérisation de monomères renfermant des groupes vinyliques.

On entend par « copolymère alkyde » un copolymère résultant de la polycondensation de polyacides, d'acides gras (ou huiles) avec des polyalcools.

On entend par « copolymères acryliques alkydes » un copolymère résultat de polycondensation de polyacides, d'acides gras (ou huiles), des polyalcools avec des monomères acryliques.

Avantageusement, le liant dans un saturateur de l'invention peut être choisi parmi un copolymère d'acrylate de butyle et de styrène, un copolymère acrylique autoréticulable, un copolymère d'acrylique et d'uréthane autoréticulable, un terpolymère d'acétate de vinyle, d'acrylate et d'esters vinyliques d'acides monocarboxyliques saturés ramifiés, un terpolymère d'acétate de vinyle, d'éthylène et d'ester méthacrylique, un terpolymère d'acétate de vinyle, d'éthylène et d'ester vinylique, un copolymère d'alkyde à base d'acides gras de huile de tall et de coton, un copolymère d'alkyde et d'uréthane, un copolymère alkyde modifié acrylique à base d'acides gras, un polymère acrylique à noyau silice, ou un mélange de ceux-ci.

Conformément à l'invention, ces liants peuvent être sous forme d'émulsion, de dispersion ou d'un latex aqueux.

A titre d'exemple de liant utilisé dans un saturateur permettant la mise en oeuvre de l'invention on peut citer :
- Une dispersion aqueuse anionique/non ionique d'un copolymère d'acrylate de butyle et de styrène à 50% avec une taille moyenne de particules comprise entre 0,05 et 0,3 µm,
- Une dispersion aqueuse anionique d'un copolymère acrylique autoréticulable à 50% avec une taille moyenne de particules comprise entre 0,05 et 0,3 µm,
- Une dispersion aqueuse d'un copolymère d'acrylique et d'uréthane autoréticulable à 35% avec une taille moyenne de particules comprise entre 0,05 et 0,3 µm,
- Une dispersion aqueuse d'un terpolymère d'acétate de vinyle, d'acrylate et de VeoVa10™ (un mélange d'esters vinyliques d'acides monocarboxyliques saturés ramifiés) à 55% avec une taille moyenne de particules comprise entre 0,25 et 0,50 µm,
- Une dispersion aqueuse anionique d'un terpolymère d'acétate de vinyle, d'éthylène et d'ester méthacrylique à 53% avec une taille moyenne de particules comprise entre 0,25 et 0,50 µm,
- Une dispersion aqueuse ionique et non ionique d'un terpolymère d'acétate de vinyle, d'éthylène et d'ester vinylique à 50% avec une taille moyenne de particules comprise entre 0,25 et 0,50µm,
- Une émulsion aqueuse d'une résine d'alkyde à 55% à base d'acides gras de huile de tall et de coton à 70% de longueur en huile avec une taille moyenne de particules entre 1 et 3 µm,
- Une émulsion aqueuse d'un copolymère d'alkyde et d'uréthane à 40%
- Une émulsion aqueuse d'une résine d'alkyde modifié par un monomère acrylique à 38% à base d'acides gras à 58% de longueur en huile.

Un autre composant essentiel dans la formulation du saturateur susceptible d'être utilisé pour la mise en oeuvre de l'invention est l'hydrofuge.

Un hydrofuge est un composé qui confère au bois des propriétés de répulsion d'eau par augmentation de la tension interfaciale entre le bois sec et l'eau condensée à sa surface.

Conformément à l'invention, l'hydrofuge est choisi parmi les copolymères à base de silicone, les copolymères à base de siloxane ou les copolymères fluorés, ou un mélange de ceux-ci.

On entend par « copolymère fluoré » un copolymère dont le motif de répétition est un fluorocarbure, et qui comprend donc de multiples liaisons carbone-fluor fortes.

Avantageusement, l'hydrofuge peut être choisi parmi un copolymère silicone, un copolysiloxane aminofonctionnel, un polysiloxane modifié avec une résine silicone à groupement fonctionnel, un copolymère acrylique, méthacrylique fluoré, ou un mélange de ceux-ci.

Les matières colorantes sont le troisième composant essentiel dans un saturateur de l'invention. Elles donnent l'effet décoratif au bois extérieur et augmentent la résistance aux UV du saturateur.

Conformément à l'invention, la matière colorante peut être un pigment organique, un pigment minéral, ou un mélange de ceux-ci.

Avantageusement, la matière colorante peut être choisie parmi les oxydes de fer transparents ou opaques, la phtalocyanine et ses dérivés, le dioxyde de titane, la terre d'ombre, les pigments de quinacridone, la benzimidazolone et ses dérivés, la quinophtalone et ses dérivés, la dioxazine carbazole, l'anthanthrone et ses dérivés, la pyrozoloquinazolone et ses dérivés, 3,6-bis(4-chlorophenyl)-2,5-dihydropyrrolo[3,4-C]pyrrole-1,4(2H,5H)-dione, ou un mélange de ceux-ci.

Le tableau I ci-après liste les composés, à titre d'exemple, en tant que matière colorante pouvant être utilisée dans un saturateur selon la présente invention.

**Tableau I**

| **Matière colorante** | **N° Index international de Couleur** |
|---|---|
| Oxyde de fer transparent jaune | P.Y. 42 |
| Oxyde de fer transparent rouge | P.R. 101 |
| Noir de Carbone | P. Blk. 7 |
| Oxyde de fer transparent brun | P.R. 101 |
| Oxyde de fer jaune opaque | P.Y. 42 |
| Oxyde de fer rouge opaque | P.R. 101 |
| Bleu de Phthalocyanine | P.B. 15.3 |
| Bleu de Phthalocyanine | P.B. 15.2 |
| Bleu de Phthalocyanine | P.B. 15.1 |
| Vert de Phthalocyanine | P.G. 7 |
| Violet de Quinacridone | P.V. 19 |
| Terre d'ombre Brûlée | P. Br. 7 |
| Dioxyde de titane | P.W. 6 |
| Maqenta de Quinacridone | PR 122 |
| Jaune organique de benzimidazolone | PY154 |
| Jaune organique de quinophtalone | PY138 |
| Jaune minéral | PY 184 |
| Violet de dioxazine Carbazole | PV 23 |
| Rouqe d'anthanthrone | PR168 |
| Rouge de DPP (3,6-BIS(4-CHLOROPHENYL)-2,5-DIHYDROPYRROLO[3,4-C]PYRROLE-1,4-DIONE) | PR254 |
| Orange de pyrazoloquinazolone | PO67 |

Contrairement aux saturateurs non déclassant connus dans l'art antérieur, qui contiennent tous un agent ignifugeant, les Inventeurs réussissent à trouver une formulation de saturateur dépourvue d'agent ignifugeant permettant de ne pas déclasser la performance au feu de bois extérieur brut après son traitement.

L'utilisation de ce type de saturateur pour bois extérieur brut par simple imprégnation à la température ambiante et à la pression atmosphérique apporte une solution technique pour maintenir durablement à la fois la performance au feu initiale du bois brut, l'aspect décoratif du bois extérieur après traitement et la protection contre des intempéries et les attaques biologiques.

Un autre avantage du saturateur selon l'invention est qu'il permet de maintenir la performance au feu d'un bois extérieur brut après le traitement par ledit saturateur. Cela permet à un bois extérieur brut de ne pas être déclassé à cause du traitement d'un saturateur.

Cette solution technique n'est pas évidente puisque jusqu'à présent, l'influence de différents composants dans un saturateur sur la performance au feu de bois extérieur brut n'est pas bien déterminée et le comportement dans le temps d'un saturateur appliqué au bois extérieur brut n'est pas prévisible.

Conformément à l'invention, on entend par « bois extérieur brut » un bois sans traitement d'ignifugation installé ou utilisé à l'extérieur de tout type de bâtiment, notamment les bardages, les chalets, les volets.

Le solvant utilisé dans un saturateur pour son utilisation selon l'invention peut être soit un solvant aqueux comme de l'eau ou au moins un solvant organique hydromiscible ou un mélange de ceux-ci.

A titre d'exemple de solvant organique hydromiscible on peut citer le monopropylène glycol, le butyldiglycol, le dipropylène glycol méthyl éther et les dérivés de glycol.

La présence d'un solvant organique hydromiscible dans un saturateur de l'invention peut abaisser la tension superficielle, augmenter le temps ouvert et permettre une meilleure pénétration du saturateur.

Dans un mode de réalisation particulier de l'invention, le pH dudit saturateur, mesuré conformément à la norme NF EN60746-2 mai 2004, est de 7 à 9,5; l'extrait sec dudit saturateur, mesuré conformément à la norme NF EN ISO 3251 avril 2008, est de 5 à 25% en poids total dudit saturateur; la viscosité cinématique dudit saturateur, mesurée à 20°C à l'aide d'un viscosimètre selon la norme NF EN ISO 2431 décembre 2011, est de 1 à 20 mm²/S; le grammage dudit saturateur est de 50 à 200 g/m².

On entend par « grammage » la quantité de saturateur déposée en humide.

Dans un mode de réalisation particulier, ledit saturateur comprend en outre au moins un additif choisi parmi un séquestrant, un correcteur pH, un conservateur, un tensioactif, un anti-mousse, un agent rhéologique, un antifongique, un catalyseur de séchage et un filtre UV.

On entend par « séquestrant » un composé capable d'enfermer les cations métalliques éventuellement présents dans un saturateur, tels que le calcium ou le magnésium, et de les empêcher de se lier à des anions pour former des sels insolubles.

Conformément à l'invention, un séquestrant peut être un polymère contenant les groupes de phosphate de sodium.

Le séquestrant est choisi en fonction du pH et du métal à complexer.

Un conservateur utilisé dans un saturateur pour l'utilisation selon l'invention doit répondre à la réglementation européenne sur les produits Biocides PT6 (Directive 98/8/CE). Il peut être, à titre d'exemple, l'isothiazolinone et ses dérivés, la pyrithione de zinc, le bronopol, ou un mélange de ceux-ci.

Les tensioactifs utilisés conformément à l'invention peuvent être les tensioactifs non ioniques ou anioniques, tels que les esters sulfonés et leurs dérivés, le polyhydroxyamide, ou un mélange de ceux-ci.

Un anti-mousse utilisé conformément à l'invention peut être un polymère à base de carbone et/ou silicium.

On entend par « agent rhéologique » un additif utilisé pour influencer les propriétés d'écoulement d'un saturateur. Il peut être un polymère modifié urée, un polymère modifié acrylique, un polymère modifié uréthane, ou un mélange de ceux-ci.

Les antifongiques utilisés conformément à l'invention peuvent être choisi parmi le butylcarbamate d'iodopropycarbendazimenyle, la carbendazime, la terbuthrine, l'isothiazolinone et ses dérivés, la pyrithione de zinc, le diuron, le propiconazole, ou un mélange de ceux-ci.

Un correcteur de PH utilisé conformément à l'invention est une solution basique et peut être la soude, l'ammoniaque, une amine et ses dérivés, ou un mélange de ceux-ci.

Un saturateur utilisé conformément à l'invention peut comprendre en outre un catalyseur de séchage, qui peut être un polymère et/ou un sel métallique (cobalt, calcium, strontium, manganèse, fer, zirconium).

La résistance au rayonnement ultraviolet du saturateur utilisé selon l'invention peut être renforcée par la présence d'un filtre UV. On peut citer en tant que filtre UV le nano-titane, le nano-oxyde de zinc, le benzotriazole et ses dérivés, des photostabilisants à base d'amine à encombrement stérique (HALS).

Dans un mode de réalisation plus particulier, l'invention concerne l'utilisation d'un saturateur de bois extérieur dépourvu d'agent ignifugeant pour maintenir durablement la performance au feu initiale, l'aspect décoratif et la protection dudit bois après l'imprégnation par ledit saturateur, ledit saturateur comprenant :
- 79,7-95% en poids total dudit saturateur d'un ou plusieurs solvants hydromiscibles,
- 3-10% en poids total dudit saturateur d'un liant,
- 1-3% en poids total dudit saturateur d'un hydrofuge,
- 0,5-2% en poids total dudit saturateur d'une matière colorante,
- 0-2% en poids total dudit saturateur d'un séquestrant,
- 0-0,5% en poids total dudit saturateur d'un correcteur pH,
- 0-0,2% en poids total dudit saturateur d'un conservateur,
- 0-0,2% en poids total dudit saturateur d'un tensioactif,
- 0-0,1% en poids total dudit saturateur d'un anti-mousse,
- 0-0,5% en poids total dudit saturateur d'un agent rhéologique,
- 0-1,5% en poids total dudit saturateur d'un antifongique,
- 0-0,2% en poids total dudit saturateur d'un catalyseur de séchage
- 0-0,1% en poids total dudit saturateur d'un filtre UV.

Conformément à l'invention on entend par pourcentage d'un composant d'un saturateur utilisé pour la mise en oeuvre de l'invention le pourcentage de la matière pure dudit composant par rapport au poids total dudit saturateur.

Les saturateurs utilisés pour la mise en oeuvre de l'invention peuvent être préparés selon toutes méthodes connues de l'homme de métier.

La présente invention concerne également une méthode pour maintenir durablement la protection d'un bois extérieur brut et sa performance au feu initiale et son aspect décoratif.

Cette méthode comprend l'imprégnation dudit bois à la température ambiante et à la pression atmosphérique par un saturateur dépourvu d'agent ignifugeant et comprenant :
- 79,7-95% en poids total dudit saturateur d'un ou plusieurs solvants hydromiscibles,
- 3-10% en poids total dudit saturateur d'un liant choisi parmi les copolymères acryliques, les copolymères vinyliques, les copolymères alkydes, les copolymères acryliques vinyles, les copolymères acryliques alkydes, les polymères de structure noyau-enveloppe à noyau organique ou minéral, ou un mélange de ceux-ci,
- 1-3% en poids total dudit saturateur d'un hydrofuge choisi parmi les copolymères à base de silicone, les copolymères à base de siloxane ou les copolymères fluorés, ou un mélange de ceux-ci,
- 0,5-2% d'au moins une matière colorante.

L'étape d'imprégnation peut être effectuée par toute technique connue de l'homme du métier, telle que la pulvérisation, l'immersion, la technique « flow coat », la brosse et le rouleau.

Après l'étape d'imprégnation de bois par un saturateur tel que décrit ci-dessus, ladite méthode peut comprendre en outre une étape de séchage dudit bois imprégné.

Le séchage peut être effectué à la température ambiante ou au four, par exposition à un rayonnement ultraviolet, ou un autre mode de séchage conventionnel.

L'étape d'imprégnation et l'étape de séchage peuvent être répétées plusieurs fois.

Conformément à l'invention, cette méthode peut être appliquée aux bois extérieurs bruts neufs avant l'installation ou après l'installation, ou aux bois à rénover.

La présente invention est illustrée plus en détail dans les exemples ci-après. Ces exemples ne peuvent en aucun cas être considérés comme une limitation de la portée de l'invention.

### Exemples

### Exemple 1 : Formulation d'un saturateur en phase aqueuse

La formulation 1 ci-après est celle d'un saturateur en phase aqueuse utilisé conformément à l'invention.

**Tableau II : formulation 1**

| Composant | % en poids de matière première contenant le composant par rapport au poids total du saturateur | % en poids de composant en matière pure par rapport au poids total du saturateur |
|---|---|---|
| Copolymère Acrylique vinylique à 50-55% (liant) | 8% | 4-4,4% |
| Monopropylène Glycol (solvant) | 1,5% | 1,5% |
| Polysiloxane à 100% (antimousse) | 0,15% | 0,15% |
| Préparation de BIT (benzisothiazolinone) à 9,5% (conservateur) | 0,3% | 0,029% |
| Copolymère acrylique urée à 30% (Agent Rhéologique) | 0,5% | 0,15% |
| Ester Sulfoné à 55% (tensioactif) | 0,3% | 0,17% |
| Hexamétaphosphate de sodium (séquestrant) | 0,5% | 0,5% |
| Copolymère silicone à 40% (hydrofuge) | 3,5% | 1,4% |
| Polymère Fluoré à 25% (hydrofuge) | 2,5% | 0,62% |
| Dispersion de titane à 58% (matière colorante) | 2,93% | 1,7% |
| Dispersion de noir de carbone à 10% (matière colorante) | 0,18% | 0,02% |
| IPBC (Butylcarbamate d'iodopropynyle) à 30% (antifongique) | 0,33% | 0,1% |
| Aminométhyl propanol à 90% (correcteur pH) | 0,1% | 0,09% |
| Eau | qsp 100% | |

Les caractéristiques physiques du saturateur ayant la formulation ci-dessus sont les suivantes :
ES (extrait sec) = 9-11%
Viscosité cinématique µ = 6-10 mm²/s
pH = 8-9
Grammage : 90-110 g/m²

L'extrait sec est mesuré selon la norme NF EN ISO 3251. Le pH est mesuré selon la norme NF EN 60746-2. La viscosité cinématique est obtenue selon la norme NF EN ISO 2431.

### Exemple 2 : Formulation d'un saturateur en phase aqueuse

La formulation 2 ci-après est celle d'un saturateur en phase aqueuse utilisé conformément à l'invention.

**Tableau III : formulation 2**

| Composant | % en poids de matière première contenant le composant par rapport au poids total du saturateur | % en poids de composant en matière pure par rapport au poids total du saturateur |
|---|---|---|
| Copolymère Acrylique alkyde à 35-40% (liant) | 8% | 2,8-3,2% |
| Monopropylène Glycol (solvant) | 1,5% | 1,5% |
| Monoéthylène glycol (solvant) | 0,57% | 0,57% |
| Polysiloxane à 100% (antimousse) | 0,1% | 0,1% |
| Préparation de BIT à 9,5% (conservateur) | 0,3% | 0,043% |
| Polyurée à 40% (Agent Rhéologique) | 0,57% | 0,23% |
| Ester Sulfoné à 55% (tensioactif) | 0,3% | 0,17% |
| Hexamétaphosphate de sodium (séquestrant) | 0,1% | 0,1% |
| Copolymère polysiloxane à 50% (hydrofuge) | 1,59% | 0,8% |
| Dispersion de dioxyde de titane à 58% (matière colorante) | 2,93% | 1,7% |
| Dispersion de noir de carbone à 10% (matière colorante) | 0,18% | 0,02% |
| IPBC à 30% | 1,03% | 0,31% |
| Ammoniaque à 20% | 0,25% | 0,05% |
| Eau | qsp 100% | |

Les caractéristiques physiques du saturateur ayant la formulation 2 sont les suivantes :
ES = 10-12%
µ = 14-18 mm²/s
pH = 8-9
Grammage : 100-130 g/m²

### Exemple 3: Mode opératoire de fabrication du saturateur ayant la formulation 2

- Mélanger un volume d'hexamétaphosphate de sodium et deux volumes d'eau sous bonne agitation sans introduire d'air dans un récipient à part. Laisser tourner jusqu'à la dissolution complète,
- Mélanger le copolymère polysiloxane à 50% et le copolymère acrylique alkyde à 38% dans une cuve à part, à l'aide d'un mélangeur et d'un disque énergiquement pendant 20 mn,
- Verser l'eau dans une cuve propre et sèche avec pale anti-vortex,
- Ajouter le mélange hexamétaphosphate de sodium/eau en filtrant à 25 µm,
- Ajouter le monopropylène glycol, la préparation de BIT à 9,5%, l'ester sulfonée à 55% et la moitié de l'antimousse polysiloxane à 100% puis bien mélanger,
- Ajouter le copolymère acrylique alkyde à 38% et ajuster la vitesse si nécessaire,
- Arrêter le mélange copolymère polysiloxane à 50% / copolymère acrylique alkyde à 38% et l'ajouter dans le mélange précédent, mélanger 15 minutes,
- Ajouter les dispersions de dioxyde de titane à 58% et de noir de carbone à 10%, mélanger 10 minutes et vérifier l'absence de particules mal dispersées.
- Ajouter l'eau restante, mélanger 10 minutes,
- Ajouter l'IPBC à 30% et mélanger 5 minutes
- Ajouter l'autre moitié de l'antimousse polysiloxane à 100% et laisser tourner 30 minutes,
- Faire un pré-mélange de l'agent rhéologique polyurée à 40% et de l'éthylène glycol juste avant l'introduction et ajouter sous agitation maximale et en une seule fois, mélanger 15 minutes, sans rincer le récipient avec de l'eau.
- Ajouter l'eau lentement pour éviter la formation de mousse
- Ajuster le pH de la formule 2 d'être compris entre 8 et 9 avec de l'ammoniaque à 20% si nécessaire.

### Exemple 4 : Mode opératoire d'application du saturateur ayant la formulation 2

- Egrenage avec une machine égreneuse,
- Pulvérisation du saturateur entre 100 et 130 g/m² sur le bois à l'aide d'un pistolet type Mixte Pneumatique et Airless avec une buse de 18/100 ouverture 80°,
- Séchage avec un four Infrarouge,
- Refroidissement dans un tunnel à Air Pulsé.

### Exemple 5 : Test de la performance au feu et de la durabilité du bois traité par un saturateur ayant la formulation 1

Le saturateur ayant la formulation 1 est préparé selon le même protocole que celui pour la préparation du saturateur ayant la formulation 2.

La performance au feu est effectuée conformément à la norme NF EN 13823 février 2013 sur les bardages en bois massif mélèze non revêtu et les bardages en bois massif revêtus d'un saturateur de formulation 1. Le niveau de la performance au feu des bardages mélèze non revêtus est Euroclasse C. Après le traitement par le saturateur de la formulation 1, la performance au feu des bardages Mélèze traités est maintenue au niveau Euroclasse C.

La formulation 1 maintient donc la performance au feu initiale du bois extérieur brut.

Le test de vieillissement naturel (pendant 1 an) est conforme à la norme EN927-3 octobre 2012. Le test de vieillissement accéléré (pendant 12 semaines) selon la norme EN927-6 octobre 2006 est effectué en exposant le bois à des lampes UV fluorescentes et à de l'eau.

Les bois revêtus vieillis sont comparés avec le témoin non vieilli. Le résultat du test de la durabilité du bois revêtu en comparaison avec le témoin non vieilli est montré dans le tableau IV ci-après.

**Tableau IV**

| **Paramètres** | **Evaluation après 2016h au QUV selon la norme EN927-6** | **Evaluation après 1 an exposition naturelle selon la norme EN927-3** |
|---|---|---|
| | **Mélèze Brut / Mélèze Revêtu avec la formulation 1** | **Mélèze Brut / Mélèze Revêtu avec la formulation 1** |
| Fendillement (du support) | 3 / 3 | 3 / 2 |
| Changement de teinte | -5 / -2 | 5 / 1 |
| Homogénéité (de la teinte) | 0 / 0 | 0 / 0 |
| Ecaillage | 0 / 0 | 0 / 0 |
| Farinage | 0 / 0 | 0 / 0 |
| Cloquage | 0 / 0 | 0 / 0 |

Pour les paramètres sauf le changement de teinte, la valeur 0 signifie un bon résultat ; la valeur 5 signifie un mauvais résultat.

Pour le changement de teinte, la valeur -5 signifie l'éclaircissement de teinte ; la valeur 0 signifie l'absence de changement de teinte ; la valeur 5 signifie la teinte plus foncé par rapport au témoin.

Ces résultats montrent que l'utilisation d'un saturateur de formulation 1 permet de maintenir la durabilité et l'aspect décoratif d'un bois extérieur brut après 1 an de vieillissement dans les conditions conformes à la norme EN 927-3.

## Revendications

1. Utilisation d'un saturateur de bois extérieur brut dépourvu d'agent ignifugeant pour maintenir durablement la performance au feu initiale, l'aspect décoratif et la protection dudit bois après l'imprégnation par ledit saturateur, ledit saturateur comprenant :
- 79,7-95% en poids total dudit saturateur d'un ou plusieurs solvants hydromiscibles,
- 3-10% en poids total dudit saturateur d'un liant choisi parmi les copolymères acryliques, les copolymères vinyliques, les copolymères alkydes, les copolymères acryliques vinyles, les copolymères acryliques alkydes, les polymères de structure noyau-enveloppe à noyau organique ou minéral, ou un mélange de ceux-ci,
- 1-3% en poids total dudit saturateur d'un hydrofuge choisi parmi les copolymères à base de silicone, les copolymères à base de siloxane ou les copolymères fluorés, ou un mélange de ceux-ci,
- 0,5-2% en poids total dudit saturateur d'au moins une matière colorante.

2. Utilisation selon la revendication 1, **caractérisée en ce que** le pH dudit saturateur est de 7 à 9,5; l'extrait sec dudit saturateur est de 5 à 25% en poids total dudit saturateur; la viscosité cinématique dudit saturateur est de 1 à 20 mm²/S; le grammage dudit saturateur est de 50 à 200 g/m².

3. Utilisation selon la revendication 1 ou 2, **caractérisée en ce que** le liant est choisi parmi un copolymère d'acrylate de butyle et de styrène, un copolymère acrylique autoréticulable, un copolymère d'acrylique et d'uréthane autoréticulable, un terpolymère d'acétate de vinyle, d'acrylate et d'esters vinyliques d'acides monocarboxyliques saturés ramifié, un terpolymère d'acétate de vinyle, d'éthylène et d'ester méthacrylique, un terpolymère d'acétate de vinyle, d'éthylène et d'ester vinylique, un copolymère d'alkyde à base d'acides gras de huile de tall et de coton, un copolymère d'alkyde et d'uréthane, un copolymère alkyde modifié acrylique à base d'acides gras, un polymère acrylique à noyau silice, ou un mélange de ceux-ci.

4. Utilisation selon l'une quelconque des revendications 1 à 3, **caractérisée en ce que** l'hydrofuge est choisi parmi un copolymère silicone, un copolysiloxane aminofonctionnel, un polysiloxane modifié avec une résine silicone à groupement fonctionnel, un copolymère acrylique, méthacrylique fluoré, ou un mélange de ceux-ci.

5. Utilisation selon l'une quelconque des revendications 1 à 4, **caractérisée en ce que** la matière colorante est choisie parmi les oxydes de fer transparents ou opaques, la phtalocyanine et ses dérivés, le dioxyde de titane, la terre d'ombre, les pigments de quinacridone, la benzimidazolone et ses dérivés, la quinophtalone et ses dérivés, la dioxazine carbazole, l'anthanthrone et ses dérivés, la pyrozoloquinazolone et ses dérivés, 3,6-bis(4-chlorophenyl)-2,5-dihydropyrrolo[3,4-c]pyrrole-1,4(2H,5H)-dione, ou un mélange de ceux-ci.

6. Utilisation selon l'une quelconque des revendications 1 à 5, **caractérisée en ce que** ledit saturateur comprend en outre un ou plusieurs solvants hydromiscibles et au moins un additif choisi parmi un séquestrant, un correcteur pH, un conservateur, un tensioactif, un anti-mousse, un agent rhéologique, un antifongique, un catalyseur de séchage et un filtre UV.

7. Utilisation selon l'une quelconque des revendications 1 à 6, **caractérisée en ce que** ledit bois brut extérieur est choisi parmi les bardages, les chalets, les volets.

8. Méthode pour protéger un bois extérieur brut et de maintenir durablement sa performance au feu initiale et son aspect décoratif, **caractérisée en ce qu'**elle comprend l'imprégnation dudit bois à la température ambiante et à la pression atmosphérique par un saturateur dépourvu d'agent ignifugeant et comprenant :
- 79,7-95% en poids total dudit saturateur d'un ou plusieurs solvants hydromiscibles,
- 3-10% en poids total dudit saturateur d'un liant choisi parmi les copolymères acryliques, les copolymères vinyliques, les copolymères alkydes, les copolymères acryliques vinyles, les copolymères acryliques alkydes, les polymères de structure noyau-enveloppe à noyau organique ou minéral, ou un mélange de ceux-ci
- 1-3% en poids total dudit saturateur d'un hydrofuge choisi parmi les copolymères à base de silicone, les copolymères à base de siloxane ou les copolymères fluorés, ou un mélange de ceux-ci,
- 0,5-2% d'au moins une matière colorante.

9. Méthode selon la revendication 8, **caractérisée en ce que** ladite méthode comprend, après l'étape d'imprégnation dudit bois, une étape de séchage dudit bois imprégné.

10. Méthode selon la revendication 8 ou 9, **caractérisée en ce que** ladite méthode est appliquée à un bois extérieur neuf ou à rénover, avant son installation ou après son installation.

## Patentansprüche

1. Verwendung eines Sättigers für naturbelassenes Holz im Außenbereich ohne Feuerschutzmittel zur dauerhaften Aufrechterhaltung des ursprünglichen Brandverhaltens, des dekorativen Aussehens und des Schutzes des Holzes nach Imprägnierung durch den Sättiger, wobei der Sättiger umfasst:
- 79,7 - 95 % Massenanteil des Sättigers aus einem oder mehreren mit Wasser mischbaren Lösungsmittel(n),
- 3 - 10 % Massenanteil des Sättigers aus einem Bindemittel, gewählt aus den Acryl-Copolymeren, den VinylCopolymeren, den Alkyd-Copolymeren, den Vinyl-Acryl-Copolymeren, den Acryl-Alkyd-Copolymeren, den Polymeren mit Kern-Schale-Struktur mit organischem oder mineralischem Kern oder einer Mischung aus diesen,
- 1 - 3 % Massenanteil des Sättigers aus einem Feuchtigkeitsschutz, gewählt aus den silikonhaltigen Copolymeren, den siloxanhaltigen Copolymeren oder den fluorhaltigen Copolymeren oder einer Mischung aus diesen,
- 0,5 - 2 % Massenanteil des Sättigers aus mindestens einem Farbstoff.

2. Verwendung nach Anspruch 1, **dadurch gekennzeichnet, dass** der pH-Wert des Sättigers bei 7 bis 9,5 liegt, der Trockenextrakt des Sättigers 5-25 % Massenanteil des Sättigers ist, die kinematische Viskosität des Sättigers 1-20 mm²/S beträgt und das Grammgewicht des Sättigers bei 50 - 200 g/m² liegt.

3. Verwendung nach Anspruch 1 oder 2, **dadurch gekennzeichnet, dass** das Bindemittel aus einem Copolymer aus Butylacrylat und aus Styrol, einem selbstvernetzenden Acryl-Copolymer, einem Copolymer aus Acryl und selbstvernetzbarem Urethan, einem verzweigten Terpolymer aus Vinylacetat, Acrylat und Vinylestern aus gesättigten Monocarbonsäuren, einem Terpolymer aus Vinylacetat, Ethylen und Methacrylsäureester, einem Terpolymer aus Vinylacetat, Ethylen und Vinylester, einem Copolymer aus Alkyd auf Tallöl- und Baumwollsamenöl-Fettsäurebasis, einem Copolymer aus Alkyd und Urethan, einem modifizierten Alkyd-Acryl-Copolymer auf Fettsäurebasis, einem Acryl-Polymer mit Silicium-Kern oder einer Mischung aus diesen gewählt wird.

4. Verwendung nach einem der vorhergehenden Ansprüche 1 bis 3, **dadurch gekennzeichnet, dass** der Feuchtigkeitsschutz aus einem Silikon-Copolymer, einem aminofunktionellen Copoly-Siloxan, einem modifizierten Polysiloxan mit einem Silikonharz mit funktioneller Gruppe, einem Acryl-, Fluormethacryl-Copolymer, oder einer Mischung aus diesen gewählt ist.

5. Verwendung nach einem der Ansprüche 1 bis 4, **dadurch gekennzeichnet, dass** der Farbstoff aus den durchsichtigen oder undurchsichtigen Eisenoxiden, dem Phthalocyanin und seinen Derivaten, dem Titandioxid, dem Umbra, den Chinacridon-Pigmenten, Benzimidazolone und seinen Derivaten, Chinophthalon und seinen Derivaten, Carbazoldioxazin, Anthanthron und seinen Derivaten, Pyrozolo-Chinazolone und seinen Derivaten, 3,6-bis(4-Chlorophenyl)-2,5-Dihydro-pyrrolo[3,4-c]Pyrrole-1,4(2H,5H)-Dione oder einer Mischung aus diesen gewählt ist.

6. Verwendung nach einem der Ansprüche 1 bis 5, **dadurch gekennzeichnet, dass** der Sättiger außerdem ein oder mehrere mit Wasser mischbare Lösungsmittel und mindestens einen Zusatzstoff umfasst, der aus einem Sequestriermittel, einem pH-Korrekturmittel, einem Konservierungsmittel, einem Tensid, einem schaumhemmenden Zusatz, einem Fließmittel, einem Antipilzmittel, einem Trocknungskatalysator und einem UV-Filter gewählt wird.

7. Verwendung nach einem der Ansprüche 1 bis 6, **dadurch gekennzeichnet, dass** das naturbelassene Holz im Außenbereich aus den Fassadenverkleidungen, Holzhütten und Fensterläden gewählt wird.

8. Verfahren zum Schutz eines naturbelassenen Holzes im Außenbereich und zur dauerhaften Aufrechterhaltung seines ursprünglichen Brandverhaltens und seines dekorativen Aussehens, **dadurch gekennzeichnet, dass** es die Imprägnierung des Holzes bei Raumtemperatur und bei Luftdruck mit einem Sättiger ohne Feuerschutzmittel umfasst, wobei das Feuerschutzmittel umfasst:
- 79,7 - 95 % Massenanteil des Sättigers aus einem oder mehreren mit Wasser mischbaren Lösungsmittel(n),
- 3 - 10 % Massenanteil des Sättigers aus einem Bindemittel, gewählt aus den Acryl-Copolymeren, den VinylCopolymeren, den Alkyd-Copolymeren, den Vinyl-Acryl-Copolymeren, den Acryl-Alkyd-Copolymeren, den Polymeren mit Kern-Schale-Struktur mit organischem oder mineralischem Kern oder einer Mischung aus diesen,
- 1 - 3 % Massenanteil des Sättigers aus einem Feuchtigkeitsschutz, gewählt aus den silikonhaltigen Copolymeren, den siloxanhaltigen Copolymeren oder den fluorhaltigen Copolymeren oder einer Mischung aus diesen,
- 0,5 - 2 % aus mindestens einem Farbstoff.

9. Verfahren nach Anspruch 8, **dadurch gekennzeichnet, dass** das Verfahren nach dem Schritt der Imprägnierung des Holzes einen Schritt zur Trocknung des imprägnierten Holzes umfasst.

10. Verfahren nach Anspruch 8 oder 9, **dadurch gekennzeichnet, dass** das Verfahren an einem neuen oder zu renovierenden Holz im Außenbereich vor seiner Montage oder nach seiner Montage eingesetzt wird.

## Claims

1. Use of a saturator for rough exterior timber devoid of fire retardant in order to durably maintain the initial fire performance, the decorative appearance and the protection of said timber after impregnation with said saturator, said saturator comprising:
- 79.7-95% based on the total weight of said saturator, one or more water-miscible solvents,
- 3-10% based on the total weight of said saturator, a binder selected from the acrylic copolymers, vinyl copolymers, alkyd copolymers, vinyl-acrylic copolymers, alkyd-acrylic copolymers, polymers of core-shell structure with an organic or mineral core, or a mixture thereof,
- 1-3% based on the total weight of said saturator, a water repellent selected from the silicon-based copolymers, siloxane-based copolymers or fluorinated copolymers, or a mixture thereof,
- 0.5-2% based on the total weight of said saturator, at least one colorant.

2. Use according to claim 1, **characterized in that** the pH of said saturator is from 7 to 9.5; the dry extract of said saturator is from 5 to 25% based on the total weight of said saturator; the kinematic viscosity of said saturator is from 1 to 20 mm²/S; the grammage of said saturator is from 50 to 200 g/m².

3. Use according to claim 1 or 2, **characterized in that** the binder is selected from a styrene and butyl acrylate copolymer, a self-crosslinking acrylic copolymer, a self-crosslinking acrylic and urethane copolymer, a terpolymer of vinyl acetate, acrylate and vinyl esters of branched saturated monocarboxylic acids, a terpolymer of vinyl acetate, ethylene and methacrylic ester, an ethylene-vinyl acetatevinyl ester terpolymer, an alkyd copolymer based on fatty acids of tall oil and cottonseed oil, an alkyd-urethane copolymer, an acrylic-modified alkyd copolymer based on fatty acids, an acrylic polymer with a silica core, or a mixture thereof.

4. Use according to any one of claims 1 to 3, **characterized in that** the water repellent is selected from a silicon copolymer, an aminofunctional copolysiloxane, a modified polysiloxane with a silicone resin having a functional group, a fluorinated acrylic or methacrylic copolymer, or a mixture thereof.

5. Use according to any one of claims 1 to 4, **characterized in that** the colorant is selected from transparent or opaque iron oxides, phthalocyanine and derivatives thereof, titanium dioxide, umber, quinacridone pigments, benzimidazolone and derivatives thereof, quinophthalone and derivatives thereof, carbazole dioxazine, anthanthrone and derivatives thereof, pyrozoloquinazolone and derivatives thereof, 3,6-bis(4-chlorophenyl)-2,5-dihydropyrrolo[3,4-c]pyrrole-1,4(2H,5H)-dione, or a mixture thereof.

6. Use according to any one of claims 1 to 5, **characterized in that** said saturator also comprises one of more water-miscible solvents and at least one additive selected from a sequestering agent, a pH-correcting agent, a preservative, a surfactant, an anti-foaming agent, a rheology control agent, an antifungal agent, a drying catalyst and a UV filter.

7. Use according to any one of claims 1 to 6, **characterized in that** said rough exterior timber is selected from cladding, cabins, shutters.

8. Method for protecting a rough exterior timber and durably maintaining its initial fire performance and its decorative appearance, **characterized in that** it comprises impregnating said timber at ambient temperature and at atmospheric pressure with a saturator devoid of fire retarding agent and comprising:
- 79.7-95% based on the total weight of said saturator, one or more water-miscible solvents,
- 3-10% based on the total weight of said saturator, a binder selected from the acrylic copolymers, vinyl copolymers, alkyd copolymers, vinyl acrylic copolymers, alkyd-acrylic copolymers, the polymers of core-shell structure with an organic or mineral core, or a mixture thereof,
- 1-3% based on the total weight of said saturator, a water-repellent agent selected from the silicone-based copolymers, the siloxane-based copolymers or the fluorinated copolymers, or a mixture thereof,
- 0.5-2% at least one colorant.

9. Method according to claim 8, **characterized in that** said method comprises, after the step of impregnating said timber, a step of drying said impregnated timber.

10. Method according to claim 8 or 9, **characterized in that** said method is applied to exterior timber that is new or to be renovated, before its installation or after its installation.
